# EUROPEAN PATENT SPECIFICATION

(11) **EP 3 518 710 B1**
(45) Date of publication and mention of the grant of the patent: **28.12.2022**
(21) Application number: 17771475.5
(22) Date of filing: 27.09.2017
(51) Int. Cl.: A47F 11/04, A47G 1/02, A45D 44/00

(54) **APPARATUS AND METHOD FOR SUPPORTING AT LEAST ONE USER IN PERFORMING A PERSONAL CARE ACTIVITY**
VORRICHTUNG UND VERFAHREN ZUR UNTERSTÜTZUNG VON MINDESTENS EINEM BENUTZER BEI EINER KÖRPERPFLEGEAKTIVITÄT
APPAREIL ET PROCÉDÉ DE SUPPORT D'AU MOINS UN UTILISATEUR DANS L'EXÉCUTION D'UNE ACTIVITÉ DE SOINS PERSONNELS

(30) Priority: 27.09.2016 EP 16190721
(43) Date of publication of application: 07.08.2019
(73) Proprietor: Koninklijke Philips N.V., 5656 AG Eindhoven (NL)
(72) Inventor: LAWRENSON, Matthew, John, 5656 AE Eindhoven (NL); GEURTS, Lucas, Jacobus, Franciscus, 5656 AE Eindhoven (NL); BUIL, Vincentius, Paulus, 5656 AE Eindhoven (NL)
(74) Representative: Philips Intellectual Property & Standards
(86) International application number: PCT/EP2017/074469
(87) International publication number: WO 2018/060232

(56) References cited:
- EP-A2- 2 210 532
- CN-A- 104 461 006
- CN-U- 204 576 413
- CN-U- 204 813 041
- JP-A- 2010 016 793
- US-A1- 2013 129 210
- US-A1- 2013 145 272
- US-A1- 2016 239 187

## Description

### TECHNICAL FIELD OF THE INVENTION

The invention relates to supporting at least one user in performing a personal care activity and, in particular to an apparatus and method for modifying an image of the at least one user to support the at least one user in performing the personal care activity.

### BACKGROUND TO THE INVENTION

A user performing a personal care activity can often benefit from being assisted during the personal care activity. For example, some smart mirrors provide an opportunity to add extra visual information to be displayed in addition to a reflection (or a representation of a scene, if a display is being used to approximate a mirror). This can be useful since people often perform various personal care activities in front of a mirror. For example, personal care activities performed in front of a mirror can include personal health activities (which may be monitored to study the health of the user performing the personal health activity), personal hygiene activities (for example, tooth care activities such as cleaning, brushing or flossing teeth, or skin care activities such as treating or cleansing skin) and personal grooming activities (for example, removing hair such as cutting hair or shaving hair on any part of their body, or brushing or straightening hair).

Thus, an opportunity exists to use additional visual (or spectral) information to assist a user during the execution of personal care activities. While spectral data is currently available through the use of spectral sensors, the spectral data is typically either displayed in a separate image, in side-by-side images, or in a single combined image (i.e. combined with the scene as would be seen by the human eye) without any delineation of activity-specific objects or actions within the scene. Also, in the case of side-by-side images, the user is often required to select between images. Therefore, the existing techniques lead to a less than optimal user experience.

Documents JP2010016793A, US 2016/239187 and CN104461006A disclose an apparatus for user activity whereby JP2010016793 discloses the preamble of claim 1.

### SUMMARY OF THE INVENTION

It would be beneficial to provide an enhanced image to a user by providing additional information to the user when the user is performing a personal care activity, which is optimised to benefit the user in performing the personal care activity whilst the overall image remains as natural as possible to the user. There is thus a need for an improved apparatus and method for supporting at least one user in performing a personal care activity.

As noted above, a limitation with existing techniques is that additional information provided to the user when the user is performing a personal care activity is not optimised to the personal care activity and thus does not provide the user with an optimal experience that will adequately support them in the personal care activity.

Therefore, according to a first aspect of the invention, there is provided an apparatus for supporting at least one user in performing a personal care activity according to claim 1.

In some embodiments, the control unit may be configured to control one or more sensors to acquire data on the at least one user indicative of the personal care activity performed by the at least one user and process the acquired data to determine the personal care activity performed by the at least one user.

In some embodiments, the control unit may be configured to acquire the information associated with the determined personal care activity from one or more memory units and/or one or more visual sensors.

In some embodiments, the control unit may be configured to control one or more user interfaces to render the modified image of the at least one user.

In some embodiments, the acquired information may comprise a spectral enhancement associated with the determined personal care activity.

According to a second aspect of the invention, there is provided a method of operating an apparatus to support at least one user in performing a personal care activity according to claim 6.

In some embodiments, determining a personal care activity performed by the at least one user may comprise comparing data on the at least one user acquired from one or more sensors, the data indicative of the personal care activity performed by the at least one user, to a plurality of predefined activity signatures stored with associated personal care activities in one or more memory units to determine the personal care activity performed by the at least one user.

In some embodiments, the personal care activity performed by the at least one user may be determined to be a personal care activity associated with one of the plurality of predefined activity signatures where the data acquired on the at least one user matches or substantially matches the predefined activity signature.

In some embodiments, the plurality of predefined activity signatures and associated personal care activities may be stored with information associated with the personal care activities in the one or more memory units and the information associated with the determined personal care activity is acquired from the one or more memory units.

In some embodiments, determining a personal care activity performed by the at least one user may comprise or further comprise detecting a signal associated with at least one personal care device used in the personal care activity, wherein the signal is indicative of the personal care activity being performed.

In some embodiments, the method may further comprise detecting at least one personal care device in the image of the at least one user.

In some embodiments, detecting at least one personal care device in the image of the at least one user may comprise detecting at least one object in the image of the at least one user, comparing the detected at least one object to a plurality of predefined object signatures stored with associated personal care devices in one or more memory units, and determining the at least one detected object to be at least one personal care device associated with one of the plurality of predefined object signatures where the detected at least one object matches or substantially matches the predefined object signature.

In some embodiments, the identified one or more regions of interest in the image may be defined by a location at which the at least one personal care device is detected in the image of the at least one user.

According to a third aspect of the invention, there is provided a computer program product according to claim 14.

According to the aspects and embodiments described above, the limitations of existing techniques are addressed. According to the invention, the image of the at least one user is modified at one or more regions of interest that are identified based on the personal care activity that the at least one user is performing. In this way, the at least one user is provided with information via the modified image that is optimised to the personal care activity. The information provided via the modified image can support the user in performing the personal care activity and thus the user may achieve improved results from the personal care activity.

There is thus provided an improved apparatus and method for supporting at least one user in performing a personal care activity, which overcomes the existing problems.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a block diagram of an apparatus according to an embodiment;
Figure 2 is a flow chart illustrating a method according to an embodiment; and
Figure 3 is a flow chart illustrating a method according to another embodiment.

### DETAILED DESCRIPTION OF THE PREFERRED EMBODIMENTS

As noted above, the invention provides an improved apparatus and method for supporting at least one user in performing a personal care activity, which overcomes the existing problems.

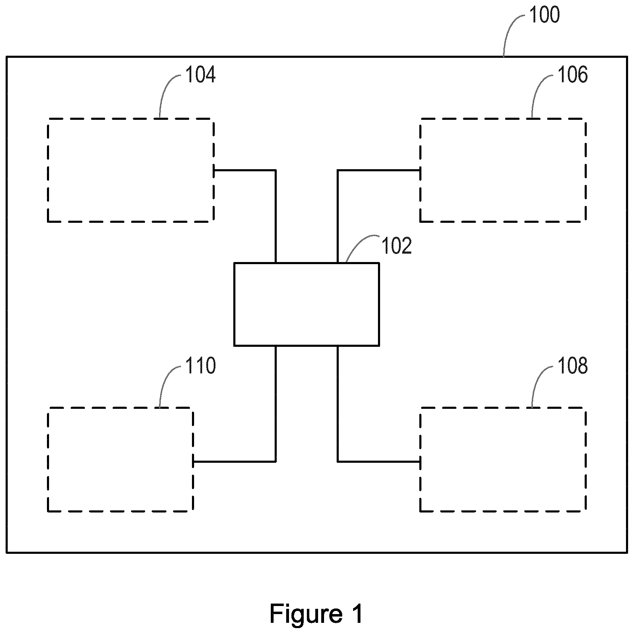

Figure 1 shows a block diagram of an apparatus 100 according to an embodiment of the invention that can be used for supporting at least one user in performing a personal care activity.

The personal care activity may comprise a personal health activity (for example, a skin assessment such as an optical skin assessment, a physiological condition assessment such as a heart rate assessment or a blood-pressure assessment, a glucose assessment, a body shape assessment such as an optical body shape assessment, a physical flexibility assessment, a wound assessment, or any other personal health activity), a personal hygiene activity (for example, tooth care activities such as cleaning, brushing or flossing teeth, skin care activities such as treating or cleansing skin, or any other personal hygiene activity), a personal grooming activity (for example, removing hair such as cutting or shaving hair on any part of the body, or brushing or straightening hair), or any other personal care activity.

The apparatus 100 comprises a control unit 102 that controls the operation of the apparatus 100 and that can implement the method described herein. The control unit 102 can comprise one or more processors, control units, multi-core processors or modules that are configured or programmed to control the apparatus 100 in the manner described herein. In particular implementations, the control unit 102 can comprise a plurality of software and/or hardware modules that are each configured to perform, or are for performing, individual or multiple steps of the method according to embodiments of the invention.

Briefly, the control unit 102 of the apparatus 100 is configured to determine a personal care activity performed by the at least one user, identify one or more regions of interest in the image of the at least one user based on the determined personal care activity, acquire information associated with the determined personal care activity, and modify the image of the at least one user at the identified one or more regions of interest based on the acquired information to support the at least one user in performing the personal care activity. The image may be a single image or a series of images (for example, a video). The image may be a two-dimensional (2D) image or a three-dimensional (3D) image. The acquired information can be any information that when used to modify the image allows a user to visualise features relating to the personal care activity that the user is performing. These features may not normally be visible to the human eye alone. For example, the features may include features relating to heat, light frequencies, colour variations, or any other features relating to the personal care activity that the user is performing.

As mentioned above, the control unit 102 of the apparatus 100 is configured to determine a personal care activity performed by the at least one user. More specifically, the control unit 102 may be configured to process data acquired on the at least one user to determine the personal care activity performed by the at least one user. In some embodiments, the control unit 102 is configured to control one or more sensors to acquire the data on the at least one user indicative of the personal care activity performed by the at least one user. In other words, in some embodiments, the control unit 102 is configured to acquire data on the at least one user indicative of the personal care activity performed by the at least one user from one or more sensors.

In the illustrated embodiment of Figure 1, the apparatus 100 comprises one or more sensors 104, which may comprise at least one sensor operable to acquire data on the at least one user indicative of the personal care activity performed by the at least one user. However, it will be understood that one or more of these sensors may alternatively or additionally be external to (i.e. separate to or remote from) the apparatus 100. In some embodiments, a personal care device that is used to perform the personal care activity may comprise one or more of the sensors. The personal care device may comprise an optical skin assessment device, a tooth care device (such as a cleaning device, a toothbrush or a flossing device), a skin care device (such as a treatment or cleansing device), a grooming device (such as a hair removal device, e.g. a hair cutting device, shaver or epilator, a hair brushing device, or hair straighteners), or any other personal care device. Alternatively or in addition, one or more of the sensors may be provided in the environment of the user such as in the proximity of a smart mirror used in the personal care activity or in the smart mirror itself.

Examples of a sensor that may be operable to acquire data on the at least one user indicative of the personal care activity performed by the at least one user may include an activity (or motion sensor), a visual (or image or spectral) sensor, an audio sensor, a proximity sensor, a posture sensor, a gaze sensor, a contact sensor, a pressure sensor, a biometric sensor, a device status sensor, a medical sensor, or any other sensor, or combination of sensors operable to acquire data on the at least one user indicative of the personal care activity performed by the at least one user.

An activity (or motion) sensor may be any sensor suitable to acquire activity or motion data on the at least one user. For example, an activity sensor may be an accelerometer, a gyroscope, a magnetometer, a visual sensor, a pressure sensor, or any other activity sensor, or any combination of activity sensors. A visual (or image or spectral) sensor may be any type of sensor, or any combination of sensors, that can acquire an image of the at least one user. In some embodiments, the visual sensor may be any visual sensor that is able to resolve the frequency of light to a set of narrow bands of frequency. The visual sensor may have a spectral range greater than the visible spectrum (such as extend into the ultraviolet UV or infrared IR range). Examples of a visual sensor that may be used are an image sensor (such as a charge-coupled device CCD image sensor, a complementary metal-oxide-semiconductor CMOS image sensor), a camera (such as an RGB camera), a video, a narrow-band visual sensor (such as an infra-red sensor or an ultraviolet sensor), a hyperspectral camera, a multispectral camera, or any other visual sensor, or any combination of visual sensors. An audio sensor may be any sensor suitable to acquire audio data on the at least one user. For example, an audio sensor may be a microphone, or any other audio sensor, or any combination of audio sensors.

A proximity sensor may be any sensor suitable to acquire proximity data on the at least one user. For example, a proximity sensor may be an infrared proximity sensor, a camera, an acoustic proximity sensor (such as an ultrasound proximity sensor), or any other proximity sensor, or any combination of proximity sensors. A posture sensor may be any sensor suitable to acquire posture data on the at least one user. For example, a posture sensor may be a visual sensor such as a camera, a weight distribution sensor, a weighing scale sensor, a worn posture sensor, an acoustic (imaging) sensor or any other posture sensor, or any combination of posture sensors. A gaze sensor may be any sensor suitable to acquire data regarding the gaze of the at least one user (i.e. the direction in which the at least one user is looking). For example, a gaze sensor may be a visual sensor such as a camera, an infrared camera in combination with infrared lighting or any other gaze sensor, or any combination of gaze sensors.

A contact sensor may be any sensor suitable to acquire data regarding contact of the device with the body or skin of the at least one user. For example, a contact sensor may be a contact switch, a pressure sensor, a capacitive touch sensor, a resistive touch sensor or any other contact sensor, or any combination of contact sensors. A pressure sensor may be any sensor suitable to acquire data regarding pressure of application of the personal care device to the treatment area of the at least one user. For example, a pressure sensor may be a piezoresistive strain gauge, a capacitive sensor, an electromagnetic sensor, a piezoelectric sensor, an optical sensor, a potentiometric sensor or any other pressure sensor, or any combination of pressure sensors.

A biometric sensor may be any sensor suitable to acquire biometric data on the at least one user. For example, a biometric sensor may be a fingerprint sensor, a palm print sensor, a camera (for example, for face or iris recognition), a microphone (for example, for voice recognition) or any other biometric sensor, or any combination of biometric sensors. A medical sensor may be any sensor suitable to acquire medical or health data from the at least on user. For example, a medical sensor may be a (for example, optical) heart rate sensor, a blood pulse sensor, a blood perfusion or a pulse oximetry sensor, a glucose sensor, a dental plaque sensor, an optical or electrical skin sensor, a temperature sensor, a body composition sensor, a vein sensor or any other medical sensor, or any combination of medical sensors.

A device status sensor may be any sensor suitable to acquire data on a personal care device used by the at least one user in performing the personal care activity. For example, a device status sensor may be a sensor that can detect a personal care device being turned on (or off) by the at least one user, a sensor that can detect the at least one user interacting with a personal care device, a sensor that can detect a personal care device being connected to a charging station, or any other device status sensor, or any combination of device status sensors.

Although examples have been provided for the type of sensor that can acquire data on the at least one user indicative of the personal care activity performed by the at least one user and for the arrangement of those sensors, it will be understood that any sensor, or any combination of sensors, suitable to acquire data on the user indicative of the personal care activity performed by the at least one user, and any arrangement of those sensors can be used. In some embodiments, multiple types of sensors can be used to acquire activity data on the user indicative of the personal care activity performed by the at least one user.

Alternatively, or in addition, to acquiring data from at least one sensor, data may be acquired from another source such as The Cloud. For example, in some embodiments, the data may comprise a history of treatments (such as a history of an intense pulsed light, IPL, treatment over a certain number of days), advice from a medical professional (such as advice from a dermatologist on the best treatment for a certain area), population health statistics, or any other data that may be relevant to the at least one user and useful in indicating the personal care activity performed by the at least one user.

As mentioned earlier, the control unit 102 of the apparatus 100 is configured to identify one or more regions of interest in an image of the at least one user based on the determined personal care activity. In some embodiments, the control unit 102 is configured to control one or more visual (or image or spectral) sensors to acquire the image of the at least one user. In other words, in some embodiments, the control unit 102 is configured to acquire the image of the at least one user from at least one visual sensor (such as those mentioned earlier). The at least one visual sensor may comprise at least one of the same visual sensors used to acquire data on the user or at least one different visual sensor to the at least one visual sensor used to acquire data on the user.

In the illustrated embodiment of Figure 1, the apparatus 100 comprises one or more sensors 104, which may comprise at least one visual (or image or spectral) sensor operable to acquire the image of the at least one user. However, it will be understood that one or more visual sensors operable to acquire the image of the at least one user may alternatively or additionally be external to (i.e. separate to or remote from) the apparatus 100. For example, one or more visual sensors operable to acquire the image of the at least one user may be provided in the environment of the user such as in a smart mirror in the environment of the user or at any other location in the environment of the user.

As mentioned earlier, a visual sensor may be any type of sensor, or any combination of sensors, that can acquire an image of the at least one user. In some embodiments, the visual sensor operable to acquire the image of the at least one user may be any visual sensor that is able to resolve the frequency of light to a set of narrow bands of frequency. The visual sensor operable to acquire the image of the at least one user may have a spectral range greater than the visible spectrum (such as extend into the ultraviolet UV or infrared IR range).

Examples of a visual sensor that may be used to acquire the image of the at least one user are an image sensor (such as a charge-coupled device CCD image sensor, a complementary metal-oxide-semiconductor CMOS image sensor), a camera (such as an RGB camera), a video, an infra-red sensor, an ultraviolet sensor, or any other visual sensor, or any combination of visual sensors. In one embodiment, an RGB camera may be used in combination with narrow band light projected on at least part of the at least one user (for example, on the face and/or body of the user) to acquire the image of the at least one user. In this way, a hyperspectral camera can be created. In embodiments in which part of the image is to be modified based on acquired information (e.g. is to be spectrally enhanced), one or more environmental conditions may be adapted (for example, to optimise the conditions for sensing or to enable sensing). This may comprise the use of colour, projections, lighting, or similar, in the environment of the at least one user. In one example, an image may be taken alternately with and without the narrow-band light projected on at least part of the at least one user.

Although examples have been provided for the type of visual sensor that can acquire the image of the at least one user and for the arrangement of sensors, it will be understood that any visual sensor suitable to acquire an image of at least one user, or any combination of visual sensors suitable to acquire an image of at least one user, and any arrangement of visual sensors can be used. In some embodiments, multiple types of visual sensors can be used.

As mentioned earlier, the control unit 102 of the apparatus 100 is configured to acquire information associated with the determined personal care activity and modify the image of the at least one user at the identified one or more regions of interest based on the acquired information to support the at least one user in performing the personal care activity. In some embodiments, the control unit 102 is configured to acquire the information associated with the determined personal care activity from one or more memory units 106 and/or one or more sensors 104. The sensors 104 may comprise one or more visual sensors. The one or more visual sensors may comprise at least one of the same visual sensors from which the image of the at least one user is acquired or at least one different visual sensor to the one or more visual sensors from which the image of the at least one user is acquired. For example, the image of the at least one user may be acquired from a visual sensor in a mirror and the information associated with the determined personal care activity may be acquired from one or more visual sensors in the personal care device. In this way, an image acquired from a first sensor can be modified using information acquired from a second sensor (for example, the image acquired from the first sensor may be modified by applying to the image information from the second sensor) at the one or more regions of interest.

In some embodiments, the apparatus 100 may comprise a memory unit 106 configured to store program code that can be executed by the control unit 102 to perform the method described herein. The memory unit 106 can also be used to store information, data, signals and measurements made or acquired by the control unit 102 of the apparatus 100 or by components, interfaces, units, sensors and devices that are external to the apparatus 100. Thus, for example, the memory unit 106 of the apparatus 100 may be configured to store information associated with a plurality of personal care activities and the control unit 102 may be configured to acquire information associated with the determined personal care activity from the memory unit 106 of the apparatus 100. However, it will be understood that the control unit 102 may alternatively or additionally be configured to acquire information associated with the determined personal care activity from a memory unit external to (i.e. separate to or remote from) the apparatus 100. One or more memory units of may alternatively or in addition store a plurality of predefined activity signatures with associated personal care activities. An activity signature is at least one feature or characteristic that is indicative of a certain activity. For example, an activity signature for an activity can comprise one or more features or characteristics that distinguish the activity from at least one other activity.

According to some embodiments, the apparatus 100 may also comprise at least one user interface 108. Alternatively or in addition, a user interface 108 may be external to (i.e. separate to or remote from) the apparatus 100. For example, the user interface 108 may be part of another device. In some embodiments, one or more user interfaces may be provided in a smart mirror used in the personal care activity (such as at home, a store, or any other location), a display on a mobile device (such as a smart phone, tablet, laptop or any other mobile device) used as a mirror in the personal care activity (such as via an application or program on the mobile device), smart glasses, an optical skin assessment device used in the personal care activity, or similar. A smart mirror used in the personal care activity may be any type of smart mirror such as a reflective smart mirror, a display-based smart mirror, a mobile device (such as a mobile phone, tablet, or similar) functioning as smart mirror (for example, via an application on the mobile device), or any other type of smart mirror.

A user interface 108 may be for use in providing the user of the apparatus 100 with information resulting from the method according to the invention. The control unit 102 may be configured to control one or more user interfaces 106 to provide information resulting from the method according to the invention. For example, in some embodiments, the control unit 102 may be configured to control one or more user interfaces 108 to render (or output) the modified image of the at least one user to support the at least one user in performing a personal care activity. The modified image of the at least one user may be rendered (or output) in real-time or near real-time. Alternatively or in addition, a user interface 108 may be configured to receive a user input. In other words, a user interface 108 may allow the user of the apparatus 100 to manually enter data, instructions, or information. For example, in some embodiments, a user interface 108 may allow the user to set personal settings such as settings on a level and/or type of information to use in modifying an image. Examples of personal settings may comprise an area to be covered with augmented data, an area around a skin device tip, or similar.

Thus, a user interface 108 may be or may comprise any component that enables rendering or output of information, data or signals to the user of the apparatus 100. Alternatively or in addition, a user interface 108 may be or may comprise any component that enables the user of the apparatus 100 to provide a user input, interact with and/or control the apparatus 100. For example, the user interface 108 may comprise one or more switches, one or more buttons, a keypad, a keyboard, a touch screen or an application (for example, on a tablet or smartphone), a display screen, a high definition (HD) display, or any other image rendering component, one or more lights, or any other user interface components, or combination of user interface components.

In an embodiment where a user interface is provided in a reflective smart mirror, the user interface may comprise a reflective layer of material that can reflect light to produce a reflected image to the user and an image overlay layer as a display operable to modify the image by overlapping acquired information associated with the determined personal care activity onto the reflected image. In an embodiment where a user interface is provided in a display-smart mirror, the user interface may comprise a camera operable to capture a scene in front of the mirror and a display (such as a flat panel) operable to display a modified image comprising a scene in front of the mirror captured by the camera modified based on the acquired information associated with the determined personal care activity. In this way, an augmented reality can be provided via a smart mirror. However, it will be understood that an augmented reality can be provided in a similar manner with any other suitable object (such as wearable smart glasses or similar).

Returning back to Figure 1, in some embodiments, the apparatus 100 may also comprise a communications interface (or circuitry) 110 for enabling the apparatus 100 to communicate with (or connect to) any components, interfaces, units, sensors and devices that are internal or external to the apparatus 100. The communications interface 110 may communicate with any components, interfaces units, sensors and devices wirelessly or via a wired connection. For example, in embodiments where one or more sensors 104 are external to the apparatus 100, the communications interface 110 may communicate with the external sensors wirelessly or via a wired connection. Similarly, in embodiments where one or more memory units 106 are external to the apparatus 100, the communications interface 110 may communicate with the external memory units wirelessly or via a wired connection. Similarly, in the embodiments where one or more user interfaces 108 are external to the apparatus 100, the communications interface 110 may communicate with the external user interfaces wirelessly or via a wired connection.

It will be appreciated that Figure 1 only shows the components required to illustrate this aspect of the invention, and in a practical implementation the apparatus 100 may comprise additional components to those shown. For example, the apparatus 100 may comprise a battery or other power supply for powering the apparatus 100 or means for connecting the apparatus 100 to a mains power supply.

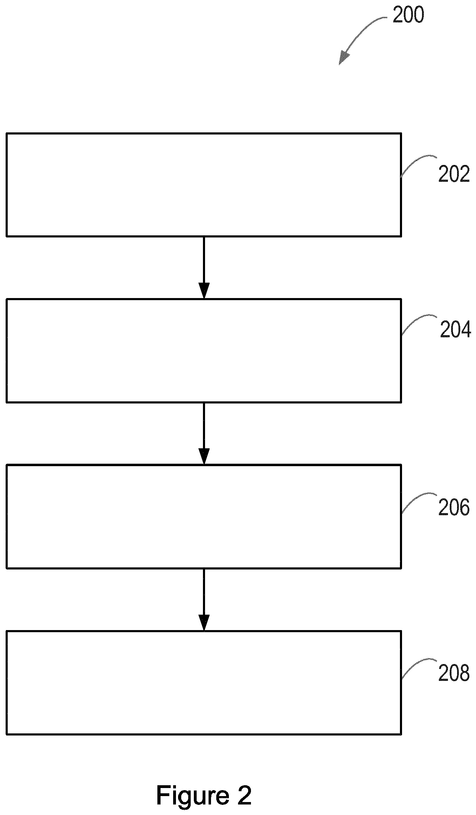

Figure 2 illustrates a method 200 of operating an apparatus to support at least one user in performing a personal care activity according to an embodiment. The illustrated method 200 can generally be performed by or under the control of the control unit 102 of the apparatus 100.

With reference to Figure 2, at block 202, a personal care activity (or personal care task) performed by the at least one user is determined. For example, a personal care activity taking place in front of a smart mirror may be determined. The personal care activity performed by the at least one user may be determined by processing data acquired on the at least one user to determine the personal care activity performed by the at least one user. As mentioned earlier, in some embodiments, the data on the at least one user may be acquired from one or more sensors, which can be sensors 104 of the apparatus 100 and/or sensors external to the apparatus 100.

In some embodiments, a personal care activity performed by the at least one user can be determined by comparing the data on the at least one user acquired from the one or more sensors to a plurality of predefined activity signatures stored with associated personal care activities in one or more memory units to determine the personal care activity performed by the at least one user. In some embodiments, the data on the at least one user acquired from the one or more sensors is continually compared to the plurality of predefined activity signatures as it is acquired. As mentioned earlier, the one or more memory units can comprise the memory unit 106 of the apparatus 100 and/or one or more memory units external to the apparatus 100. The plurality of predefined activity signatures with associated personal care activities may be stored in one or more memory units in the form of a look-up table (LUT). An example for the form of this look-up table is provided:

| Activity LUT | |
|---|---|
| Activity Signature | Activity |
| Activity Signature 1 | Activity 1 |
| Activity Signature 2 | Activity 2 |
| Activity Signature 3 | Activity 3 |

However, while an example has been provided for the form of this look-up table, it will be understood that other forms of look-up table are also possible and that the look-table may comprise any number of predefined activity signatures and associated personal care activities.

The personal care activity performed by the at least one user may be determined to be a personal care activity associated with one of the plurality of predefined activity signatures where the data acquired on the at least one user matches or substantially matches (for example, within a predefined tolerance or beyond a predefined probability) the predefined activity signature. In some embodiments, the control unit 102 of the apparatus 100 may control one or more user interfaces 108 to output the name of the activity associated with the matched predefined activity signature.

According to the invention, a personal care activity performed by the at least one user can be determined by detecting a signal associated with at least one personal care device used in the personal care activity, wherein the signal is indicative of the personal care activity being performed. For example, the signal may be indicative of the user picking up at least one personal care device used in the personal care activity, turning on at least one personal care device used in the personal care activity, connecting at least one personal care device used in the personal care activity to a charger station, or any other signal associated with at least one personal care device used in the personal care activity that is indicative of the personal care activity being performed. In some embodiments, the signal may be received by the control unit 102 of the apparatus 100 via the communications interface 110 from the personal care device itself. As mentioned earlier, the personal care device may comprise an optical skin assessment device, a tooth care device (such as a cleaning device, a toothbrush or a flossing device), a skin care device (such as a treatment or cleansing device), a grooming device (such as a hair removal device, e.g. a hair cutting device, shaver or epilator, a hair brushing device, or hair straighteners), or any other personal care device.

At block 204, one or more regions of interest are identified in an image of the at least one user based on the determined personal care activity. As described earlier, in some embodiments, the image of the at least one user may be acquired from one or more visual sensors, which can be sensors 104 of the apparatus 100 and/or sensors external to the apparatus 100. The image of the at least one user may be an image of the scene in which the personal care activity is taking place. Any suitable imaging technique may be used to acquire the image of the at least one user. For example, the imaging technique may comprise a standard imaging technique such as a digital imaging technique via a charge coupled device CCD, a complementary metal-oxide semiconductor CMOS or a Foveon sensor with suitable optics, a spectral imaging technique, or any other suitable imaging technique. The one or more regions of interest in the image may be areas of the image where information that is relevant to the personal care activity being performed by the user. For example, the one or more regions of interest may be areas in which activity-relevant information is advantageous to the user such as a part of the body of the at least one user at which the personal care activity is being performed (e.g. the hair in a haircare activity), the area at which a personal care device used in the personal care activity is present, or similar.

At block 206, information associated with the determined personal care activity is acquired. In some embodiments, the plurality of predefined activity signatures and associated personal care activities may be stored with information associated with the personal care activities in one or more memory units. In these embodiments, the information associated with the determined personal care activity can be acquired from the one or more memory units. As described earlier, the one or more memory units may comprise a memory unit 106 of the apparatus 100 or one or more memory units external to the apparatus 100. The information associated with the personal care activities may be stored with a unique name.

The plurality of predefined activity signatures, associated personal care activities and information associated with the personal care activities may be stored in the form of a look-up table (LUT). An example for the form of this look-up table is provided below:

| Information LUT | | |
|---|---|---|
| Activity Signature | Activity | Information |
| Activity Signature 1 | Activity 1 | Information 1 |
| Activity Signature 2 | Activity 2 | Information 2 |
| Activity Signature 3 | Activity 3 | Information 3 |

However, while an example has been provided for the form of this look-up table, it will be understood that other forms of look-up table are also possible and that the look-table may comprise any number of predefined activity signatures, associated personal care activities and information associated with the personal care activities.

In some embodiments, the look-up table may be a pre-programmed look-up table. Alternatively or in addition, in some embodiments, the look-up table may be modifiable by a user. For example, it may be possible for a user to modify the information associated with the personal care activities that is to be used to modify the image during those personal care activities according to the personal taste of the user. In some situations, there may be various types of information associated with a personal care activity and the at least one user may be provided with an opportunity (for example, via a user interface 108) to select which information to use to modify the image to support them with the personal care activity.

In some embodiments, the acquired information may comprise one or more graphics associated with the determined personal care activity. Alternatively or in addition, in some embodiments, the acquired information may comprise a spectral enhancement or modification associated with the determined personal care activity. For example, the spectral enhancement may comprise an algorithmic modification to be applied to the image using spectral data acquired from one or more visual sensors as an input. Alternatively or in addition, in some embodiments, the acquired information may comprise a zoom modification, a modification that causes a different view to be rendered (for example, by a change to the tilt of the visual sensor from which the image is acquired) or a modification that causes only part of the image to be displayed.

At block 208, the image of the at least one user is modified at the identified one or more regions of interest based on the acquired information to support the at least one user in performing the personal care activity. Since the image is modified at the identified one or more regions of interest, the information provided by the modification is more easily understood by the at least one user. For example, it may be that the modification is not applied to the entire treatment areas on the at least one user in the image. In some examples, the modified image may be displayed when the device is at a predefined distance (such as a predefined treatment distance) from the treatment area (for example, the face, leg, or similar) and not displayed when the device is further away from that area. In some examples, the image may be modified differently depending on the posture of the at least one user. For example, a visual modification applied to the image may change when the at least one user leans forward (e.g. more specific information may be provided when the at least one user leans forward) or when the at least one user leans backward (e.g. a different modification mode may be activated such as a mode in which a process for the personal care activity is displayed to the at least one user). In some examples, the user may be able to change a modification of an image such as via at least one user interface or handheld device. For example, the user may be able to zoom in or out of the image.

According to the invention the image is modified by overlaying the acquired information on the image of the at least one user. This may be the case where the modified image is to be rendered by a reflective smart mirror via an image overlay layer, as described earlier. For example, as mentioned earlier, the acquired information may comprise one or more graphics associated with the determined personal care activity. Alternatively or in addition, in some embodiments, the image may be modified by applying the acquired information directly to the image. For example, the image may be modified based on the acquired information by zooming in to the image of the at least one user at the identified one or more regions of interest or by only displaying the identified one or more regions of interest.

Alternatively or in addition, in some embodiments, the image may be modified by spatially combining the acquired information with the image. This may be the case where the modified image is to be rendered by a display-based smart mirror via display (such as a flat panel), as described earlier. For example, as mentioned earlier, the acquired information may comprise a spectral enhancement or modification associated with the determined personal care activity. The image may be modified by displaying the spectral enhancement or modification in co-location with the image of the reflection of the user's face or a model (for example, a two-dimensional or three-dimensional model) of the user's face. In some embodiments, the face of a user may be tracked in the image of the user using any suitable facial tracking and the image may be modified by positioning the spectral enhancement or modification in relation to the face of the user. For example, the spectral enhancement may be displayed over or in alignment with the user's face.

An example of a spectral enhancement is an algorithmic modification that can be applied to the image of the at least one user that uses spectral data acquired from one or more visual sensors as an input. For example, an image may be acquired with a plain background and an object A may be present in the foreground. A visual sensor captures the scene and represents it, for example, using an RGB colour model. Another visual sensor captures the same scene and represents it in a different way, for example, using 1,000 spectral bands. In other words, each pixel of the image has a value for b₀, b₁, b₂,... b₉₉₉, where bᵢ denotes a spectral band. Thus, each pixel has both an RGB value and a 'b' value. The spectral enhancement may then be an algorithm that, for pixels within the area representing object A, replaces the RGB value for each pixel with a 'b' value between b₉₅₀...b₉₇₅ with an RGB value of 255,0,0 (i.e. bright red). In this way, the user may see features that it is not possible to see with their eyes alone. For example, it may be that the band b₉₅₀...b₉₇₅ is outside the visible spectrum and thus not visible to the user with their eyes alone.

The modified image provides information to the at least one user to support the user in performing the personal care activity. For example, in some embodiments, the modified image can provide information to the at least one user of areas of the body that are not to be treated, areas of the body that still need to be treated, the progress of the personal care activity, or any other feature associated with the personal care activity to support the user in preforming that personal care activity. The information provided by the modified image can be used to guide the user in performing the personal care activity and/or inform the user of the progress of the personal care activity. In one example, the modified image may comprise an overlay of data on or around the area that has been treated with a personal care device and this data may fade out over time. In another example, the modified image may provide information at regions where treatment is still need to guide the user to these regions. In another example, the modified image may provide information that shows a level of treatment to be applied (such as a value indicating, for example, the amount of makeup still to remove at a certain region).

Although examples have been provided for the information that can be used to modify images, it will be understood that any form of information suitable to support the at least one user in performing a personal care activity can be used.

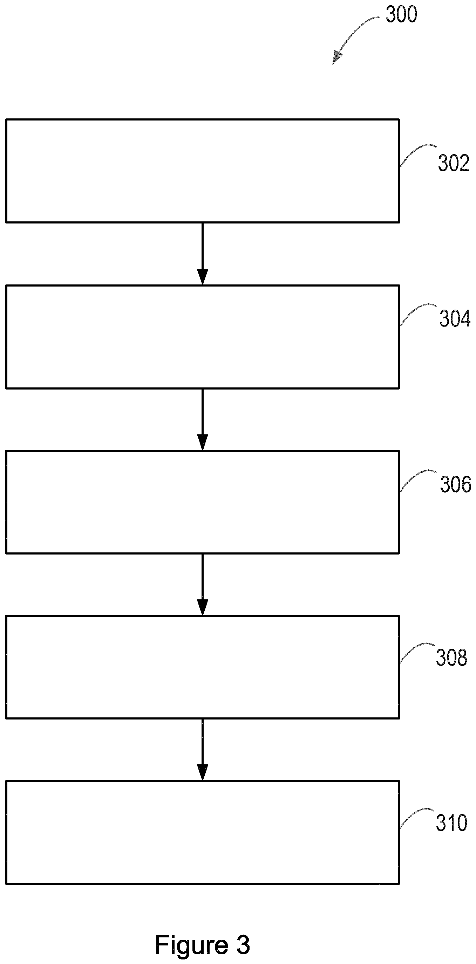

Figure 3 illustrates a method 300 of operating an apparatus to support the at least one user in performing a personal care activity according to another embodiment. The illustrated method 300 can generally be performed by or under the control of the control unit 102 of the apparatus 100.

With reference to Figure 3, a personal care activity performed by the at least one user is determined at block 302. In other words, the method described above with respect to block 202 of Figure 2 is performed and thus the corresponding description will be understood to apply but will not be repeated here.

At block 304 of Figure 3, at least one personal care device is detected (or identified) in the image of the at least one user. The personal care device is a device that is associated with the personal care activity performed by the user. In some embodiments, detecting (or identifying) at least one personal care device in the image of the at least one user may comprise detecting at least one object in the image of the at least one user and comparing the detected at least one object to a plurality (or set) of predefined object signatures stored with associated personal care devices in one or more memory units to determine if the at least one detected object in the image of the at least one user is at least one personal care device. The at least one detected object may be determined to be at least one personal care device associated with one of the plurality of predefined object signatures where the detected at least one object matches or substantially matches (for example, within a predefined tolerance or beyond a predefined probability) the predefined object signature. In this way, it is possible to detect known objects (specifically, personal care devices) from a set of objects within the image of the at least one user. As mentioned earlier, the one or more memory units can comprise the memory unit 106 of the apparatus 100 and/or one or more memory units external to the apparatus 100. The plurality of predefined object signatures with associated personal care devices may be stored in one or more memory units in the form of a look-up table (LUT). An example for the form of this look-up table is provided below:

| Device LUT | |
|---|---|
| Object Signature | Device |
| Object 1 | Device 1 |
| Object 2 | Device 2 |
| Object 3 | Device 3 |

However, while an example has been provided for the form of this look-up table, it will be understood that other forms of look-up table are also possible and that the look-table may comprise any number of predefined object signatures and associated personal care devices.

At block 306 of Figure 3, one or more regions of interest are identified in the image of the at least one user based on the determined personal care activity. In other words, the method described above with respect to blocks 204 of Figure 2 is performed and thus the corresponding description will be understood to apply but will not be repeated here. However, in the embodiment illustrated in Figure 3, the identified one or more regions of interest in the image may also be defined by a location at which the at least one personal care device is detected in the image of the at least one user. For example, the area of the image that contains the at least one personal care device may be defined as a region of interest.

At block 308 of Figure 3, information associated with the determined personal care activity is acquired. In other words, the method described above with respect to block 206 of Figure 2 is performed and thus the corresponding description will be understood to apply but will not be repeated here. In the embodiment illustrated in Figure 3, the plurality of predefined object signatures, associated personal care activities, and information associated with the personal care activities may be stored in one or more memory units, for example, in the form of a look-up table (LUT). An example for the form of this look-up table is provided below:

| Information LUT | | |
|---|---|---|
| Object Signature | Activity | Information |
| Object 1, Object 2 | Activity 1 | Information 1 |
| Object 3 | Activity 2 | Information 2 |
| Object 4, Object 5 | Activity 3 | Information 3 |

However, while an example has been provided for the form of this look-up table, it will be understood that other forms of look-up table are also possible and that the look-table may comprise any number of predefined object signatures, associated personal care activities and information associated with the personal care activities.

In some embodiments, the look-up table may be a pre-programmed look-up table. Alternatively or in addition, in some embodiments, the look-up table may be modifiable by a user. For example, it may be possible for a user to modify the information associated with the personal care activities that is to be used during those personal care activities according to the personal taste of the user.

At block 310 of Figure 3, the image of the at least one user is modified at the identified one or more regions of interest based on the acquired information to support the at least one user in performing the personal care activity. In other words, the method described above with respect to block 208 of Figure 2 is performed and thus the corresponding description will be understood to apply but will not be repeated here. However, as mentioned earlier, in the embodiment illustrated in Figure 3, the area of the image that contains the at least one personal care device may be defined as a region of interest. Thus, the image of the at least one user may be modified based on the acquired information within the boundary of the region of interest containing the at least one personal care device to support the at least one user in performing the personal care activity.

Although not illustrated in Figures 2 or 3, in either of the embodiments illustrated in Figures 2 and 3, the method may further comprise rendering (or outputting) the modified image of the at least one user to support the at least one user in performing a personal care activity. The modified image of the at least one user may be rendered (or output) by a user interface 108 of the apparatus 100 or a user interface external to the apparatus 100. As described earlier, the modified image of the at least one user may be rendered (or output) in real-time or near real-time.

In any of the embodiments described herein, the apparatus 100 can be suitable for a multi-user environment in which a plurality of (i.e. more than one) users are present in an image. For example, the apparatus 100 can be suitable in a situation where multiple users are performing personal care activities at the same time (such as in front of the same mirror). In the multi-user embodiment, the control unit 102 of the apparatus 100 may be configured to identify each of the plurality of users in the image and determine the personal care activity performed by each user to modify the image appropriately for each user.

In an example embodiment of the apparatus 100 in use, a user may pick up a hair dryer. The control unit 102 of the apparatus 100 may modify the image by applying a spectral enhancement to the image (such as by using far infrared FIR) to visualise the wetness of the hair. In this example embodiment, the hair may be the region of interest and the visualisation may only be projected on the hair (i.e. the face and other body areas may be excluded). In this way, the apparatus 100 can indicate when a proper dryness of the hair has been reached and may warn of overheating of certain hair areas.

In another example embodiment of the apparatus 100 in use, a user may pick up a skin cleansing device to cleanse their face. In this example embodiment, the face area may be the region of interest and thus the control unit 102 of the apparatus 100 may modify the image by applying a spectral enhancement to the face area. For example, in a mirror image, the colour of the face area may be enhanced while the colour of other parts of the body (such as the hair, neck and other body parts) may be shown in their natural colours. In this way, the apparatus 100 can show which areas have been treated and which areas have not been treated. For example, the spectral enhancement may include a specific colour band that shows skin redness that is normally invisible to the naked eye. Alternately, the spectral enhancement may show areas in which make-up is properly removed, or absorption of a cream into the skin. In one example, the type of cream or fluid applied to the skin may be known (such as via user input or via visual markers in the cream or fluid), at least one sensor may detect traces (or coverage) of the cream or fluid on the skin, and the spectral enhancement may highlight certain areas of the skin (such as areas in which the cream or fluid is or is not applied) to support the user. The apparatus 100 may also show which areas of the face are covered during a face cleansing activity. Other embodiments may also show which areas of the body are covered during a personal care activity (for example, during shaving, epilation, Intense Pulsed Light IPL hair removal, or any other personal care activity).

In another example embodiment of the apparatus 100 in use, after cleaning the face, the user may lean forward to look more closely at their neck and upper chest area. In this example embodiment, the control unit 102 of the apparatus 100 may detect the body posture change and gaze of the user and then begin spectral enhancement of the neck and upper chest area as a region of interest, such as to visualise skin health and/or the appearance of the skin in this area. Alternatively, this may be achieved through detection of a closer proximity of the user to a mirror used in the personal care activity.
In another example embodiment of the apparatus 100 in use, a user may pick up an optical skin assessment (OSA) device. The control unit 102 of the apparatus 100 may provide spectral enhancement to visualise skin oiliness, skin damage, UV, or any other property of the skin, using a camera in a smart mirror. When the user holds the OSA device at a particular distance from the skin (e.g. 5-10cm from the skin), the control unit 102 of the apparatus 100 may modify the image by switching to a camera in the OSA device and showing a spectrally enhanced image from the OSA camera in the mirror display. When holding the OSA device onto the skin, the control unit 102 of the apparatus 100 may mix images from both cameras to provide an enhanced view of the areas in contact with the OSA device and the surrounding skin.

In another example embodiment of the apparatus 100 in use, a user may pick up a shaving device and perform the activity of raising a leg in front of a smart mirror. The control unit 102 of the apparatus 100 may detect that the user wants to shave the leg from this activity. In the case of a reflective smart mirror, the control unit 102 may provide a spectral enhanced overlay image on the reflection of the leg in the smart mirror to improve the visibility of the hairs such that the user can see which parts have been treated and which parts have not been treated. In case of a display-based smart mirror, a camera (for example, a hyperspectral camera) may tilt, pan, or zoom into the leg area currently being treated to create optimal visibility of the treatment area.

In another example embodiment of the apparatus 100 in use, after shaving, a user may pick up an intense pulsed light (IPL) device. The control unit 102 of the apparatus 100 on detecting this begins a spectral enhancement of an image of the leg area to visualise the parts of the leg that the user has treated. For example, the control unit 102 may modify the image by overlaying onto the image calculated hair growth information since previous treatments to indicate if treatment is necessary or on which parts treatment is necessary. When the user starts treating the area, the control unit 102 may monitor and visualise the coverage of the treatment.

Therefore, as described above, there is provided an improved apparatus and method supporting at least one user in performing a personal care activity. Specifically, the apparatus and method can identify personal care activities being performed by at least one user, determine whether execution of the personal care activities can be assisted through modification of an image of the at least one user and determine a relevant area in the image to modify. The information provided by the modified image can allow the at least one user to visualise features related to the personal care activity that are not normally visible to the human eye alone. The information provided by the modified image can support the user in performing the personal care activity and thus the user may achieve improved results from the personal care activity. The apparatus and method disclosed herein is suitable for any type of personal care activity including but not limited to health care activities, personal hygiene activities and personal grooming activities.

There is also provided a computer program product comprising a computer readable medium, the computer readable medium having computer readable code embodied therein, the computer readable code being configured such that, on execution by a suitable computer or processor, the computer or processor is caused to perform the method or methods described herein.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. The invention is defined by the appended claims.

## Claims

1. An apparatus (100) for supporting at least one user in performing a personal care activity, the apparatus (100) comprising:
a smart mirror comprising a visual sensor (104) configured to obtain an image of the at least one user while the at least one user is performing the personal care activity;
a control unit (102) configured to:
acquire, from at least one visual sensor (104), an image of the at least one user using the personal care device on the part of the body of the at least one user;
**characterized in that** the control unit(102) is further configured to:
determine a personal care activity performed by the at least one user using the personal care device on a part of the body of the at least one user
identify, based on the determined personal care activity, one or more regions of interest in the acquired image of the at least one user, wherein the one or more regions of interest in the image comprise the part of the body of the at least one user on which the personal care activity is being performed;
acquire information associated with the determined personal care activity; and
modify the acquired image of the at least one user at the identified one or more regions of interest based on the acquired information to support the at least one user in performing the personal care activity using the personal care device on the part of the body of the at least one user; and
display, by overlaying on the identified one or more regions of interest of the at least one user's reflection in the smart minor, some or all of the modified image.

2. An apparatus as claimed in claim 1, wherein the control unit (102) is configured to control one or more sensors (104) to acquire data on the at least one user indicative of the personal care activity performed by the at least one user and process the acquired data to determine the personal care activity performed by the at least one user.

3. An apparatus as claimed in any one of the preceding claims, wherein the control unit (102) is configured to acquire the information associated with the determined personal care activity from one or more memory units (106) and one or more visual sensors (104).

4. An apparatus as claimed in any one of the preceding claims, wherein the control unit is configured to control one or more user interfaces (108) to render the modified image of the at least one user.

5. An apparatus as claimed in any one of the preceding claims, wherein the acquired information comprises a spectral enhancement associated with the determined personal care activity.

6. A method (200, 300) of operating an apparatus (100) comprising a smart mirror comprising a visual sensor (104) configured to obtain an image of the at least one user and a control unit (102) configured to receive from the at least one visual sensor (104) the obtained image of the at least one user to support at least one user in
performing a personal care activity, the method (200, 300) comprising:
acquiring from the at least one visual sensor (104) the obtained image of the at least one user using the personal care device on the part of the body of the at least one user
**characterized in that** the method further includes
determining (202, 302) a personal care activity performed by the at least one user using a personal care device on a part of the body of the at least one user;
identifying (204, 304), based on the determined personal care activity, one or more regions of interest in the acquired image of the at least one user, wherein the one or more regions of interest in the image comprise the part of the body of the at least one user on which the personal care activity is being performed;
acquiring (206, 306) information associated with the determined personal care activity; and
modifying (208, 310) the acquired image of the at least one user at the identified one or more regions of interest based on the acquired information to support the at least one user in performing the personal care activity using the personal care device on the part of the body of the at least one user;
displayiny, by overlaying on the identified one or more regions of interest of the at least one user's reflection in the smart minor, some or all of the modified image.

7. A method as claimed in claim 6, wherein determining a personal care activity performed by the at least one user comprises:
comparing data on the at least one user acquired from one or more sensors, the data indicative of the personal care activity performed by the at least one user, to a plurality of predefined activity signatures stored with associated personal care activities in one or more memory units to determine the personal care activity performed by the at least one user.

8. A method as claimed in claim 7, wherein the personal care activity performed by the at least one user is determined to be a personal care activity associated with one of the plurality of predefined activity signatures where the data acquired on the at least one user matches or substantially matches the predefined activity signature.

9. A method as claimed in any of claims 7 or 8, wherein the plurality of predefined activity signatures and associated personal care activities are stored with information associated with the personal care activities in the one or more memory units and the information associated with the determined personal care activity is acquired from the one or more memory units.

10. A method as claimed in any of claims 6 to 9, wherein determining a personal care activity performed by the at least one user comprises or further comprises:
detecting a signal associated with at least one personal care device used in the personal care activity, wherein the signal is indicative of the personal care activity being performed.

11. A method as claimed in any of claims 6 to 10, the method further comprising:
detecting (308) at least one personal care device in the image of the at least one user.

12. A method as claimed in claim 11, wherein detecting at least one personal care device in the image of the at least one user comprises:
detecting at least one object in the image of the at least one user;
comparing the detected at least one object to a plurality of predefined object signatures stored with associated personal care devices in one or more memory units; and
determining the at least one detected object to be at least one personal care device associated with one of the plurality of predefined object signatures where the detected at least one object matches or substantially matches the predefined object signature.

13. A method as claimed in any of claims 11 or 12, wherein the identified one or more regions of interest in the image are defined by a location at which the at least one personal care device is detected in the image of the at least one user.

14. A computer program product comprising a computer readable medium, the computer readable medium having computer readable code embodied therein, the computer readable code being configured such that, on execution by a suitable computer or processor, the computer or processor is caused to perform the method of any of claims 6 to 13.

## Patentansprüche

1. Eine Gerät (100) zur Unterstützung mindestens eines Benutzers bei der Durchführung einer persönlichen Pflegetätigkeit, wobei die Gerät (100) umfasst:
einen intelligenten Spiegel, der einen visuellen Sensor (104) umfasst, der so konfiguriert ist, dass er ein Bild des mindestens einen Benutzers erhält, während der mindestens eine Benutzer die persönliche Pflegeaktivität durchführt;
eine Steuereinheit (102), die dafür konfiguriert ist:
Erfassen, durch mindestens einen visuellen Sensor (104), eines Bildes des mindestens einen Benutzers, der das persönliche Pflegegerät auf dem Körperteil des mindestens einen Benutzers benutzt; **dadurch gekennzeichnet, dass** die Steuereinheit (102) ferner konfiguriert ist zum:
Bestimmen einer persönlichen Pflegeaktivität, die von dem mindestens einen Benutzer unter Verwendung der persönlichen Pflegegerät an einem Körperteil des mindestens einen Benutzers durchgeführt wurde, Identifizieren, auf der Grundlage der bestimmten persönlichen Pflegetätigkeit, einer oder mehrerer Regionen von Interesse in dem erfassten Bild des mindestens einen Benutzers, wobei die eine oder mehreren interessierenden Regionen im Bild den Körperteil des mindestens einen Benutzers umfassen, an dem die persönliche Pflegeleistung erbracht wird;
Informationen im Zusammenhang mit der bestimmten persönlichen Pflege- Aktivität zu erhalten; und
das erfasste Bild des mindestens einen Benutzers an der identifizierten
einen oder den mehreren Regionen von Interesse auf der Grundlage der erfassten Informationen ändern, um den mindestens einen Benutzer bei der Durchführung der Körperpflegeaktivität mit dem Körperpflegegerät an dem Körperteil
des mindestens einen Benutzers zu unterstützen; und
Anzeige eines Teils oder der Gesamtheit des geänderten Bildes durch Überlagerung des identifizierten einen oder der mehreren interessanten Regionen des Bildes des mindestens einen Benutzers im intelligenten Spiegel.

2. Gerät wie beansprucht in Anspruch 1, wobei die Steuereinheit (102)
konfiguriert ist, um einen oder mehrere Sensoren (104) zu steuern, um Daten über den mindestens einen Benutzer zu erfassen, welche Aufschluss geben über die persönliche Pflegeaktivität des mindestens einen Benutzers, und die erfassten Daten zu verarbeiten, um die von dem mindestens einen Benutzer durchgeführte persönliche Pflegeaktivität zu bestimmen.

3. Gerät wie beansprucht in einem der vorangegangenen Ansprüche, wobei die Steuereinheit (102) so konfiguriert ist, dass sie die mit der bestimmten persönlichen Pflegeaktivität verbundenen Informationen von einer oder mehreren Speichereinheiten (106) und einem oder mehreren visuellen Sensoren (104) erfasst.

4. Gerät wie beansprucht in einem der vorhergehenden Ansprüche, wobei die Steuereinheit so konfiguriert ist, dass sie eine oder mehrere Benutzerschnittstellen (108) steuert, um das geänderte Bild des mindestens einen Benutzers darzustellen.

5. Gerät wie beansprucht in einem der vorangehenden Ansprüche, wobei die erfasste Information eine spektrale Anreicherung umfasst, die mit der bestimmten persönlichen Pflegeaktivität verbunden ist.

6. Verfahren (200, 300) zum Betreiben eines Gerätes (100), das einen intelligenten Spiegel umfasst, der einen visuellen Sensor (104) umfasst, der so konfiguriert ist, dass er ein Bild des mindestens einen Benutzers erhält, und eine Steuereinheit (102) umfasst, die so konfiguriert ist, dass sie von dem mindestens einen visuellen Sensor (104) das erhaltene Bild des mindestens einen Benutzers empfängt, um den mindestens einen Benutzer bei einer persönlichen Pflegeaktivität zu unterstützen, wobei das Verfahren (200, 300) Folgendes umfasst:
Erfassen des erhaltenen Bildes des mindestens einen Benutzers, der das persönliche Pflegegerät auf dem Körperteil des mindestens einen Benutzers benutzt, von dem mindestens einen visuellen Sensor (104), **dadurch gekennzeichnet, dass** das Verfahren ferner umfasst Bestimmen (202, 302) einer persönlichen Pflegeaktivität, die von dem mindestens einen Benutzer unter Verwendung eines persönlichen Pflegegerätes an einem Körperteil des mindestens einen Benutzers durchgeführt wird;
Identifizieren (204, 304) einer oder mehrerer Regionen von Interesse in dem erfassten Bild des mindestens einen Benutzers auf der Grundlage der bestimmten persönlichen Pflegeaktivität, wobei die eine oder die mehreren Regionen von Interesse in dem Bild den Teil des Körpers des mindestens einen Benutzers umfassen, an dem die persönliche Pflegeaktivität durchgeführt wird;
Erfassen (206, 306) von Informationen, die mit der bestimmten persönlichen Pflegeaktivität verbunden sind; und
Ändern (208, 310) des erfassten Bildes des mindestens einen Benutzers an dem identifizierten einen oder den mehreren Regionen von Interesse auf der Grundlage der erfassten Informationen, um den mindestens einen Benutzer bei der Durchführung der persönlichen Pflegeaktivität unter Verwendung des persönlichen Pflegegerätes an dem Körperteil des mindestens einen Benutzers zu unterstützen;
Anzeige eines Teils oder der Gesamtheit des geänderten Bildes durch Überlagerung der identifizierten einen oder der mehrerer interessanter Regionen des Spiegelbildes des mindestens einen Benutzers im intelligenten Spiegel.

7. Verfahren wie beansprucht in Anspruch 6, wobei das Bestimmen einer persönlichen Pflegeaktivität, die von dem mindestens einen Benutzer durchgeführt wird, umfasst:
Vergleichen von Daten über den mindestens einen Benutzer, die von einem oder mehreren Sensoren erfasst wurden, wobei die Daten, die die von dem mindestens einen Benutzer durchgeführte persönliche Pflegeaktivität anzeigen, mit einer Vielzahl von vordefinierten Aktivitätssignaturen verglichen werden, die mit zugehörigen persönlichen Pflegeaktivitäten in einer oder mehreren Speichereinheiten gespeichert sind, um die von dem mindestens einen Benutzer durchgeführte persönliche Pflegeaktivität zu bestimmen.

8. Verfahren wie beansprucht in Anspruch 7, wobei die von dem mindestens einen Benutzer durchgeführte Körperpflegeaktivität als eine Körperpflegeaktivität bestimmt wird, die mit einer der mehreren vordefinierte Aktivitätssignaturen in Zusammenhang stehen, wobei die von dem mindestens einen Benutzer erfassten Daten mit der vordefinierten Aktivitätssignatur übereinstimmen oder im Wesentlichen übereinstimmen.

9. Verfahren wie beansprucht in einem der Ansprüche 7 oder 8, wobei die mehreren vordefinierten Aktivitätssignaturen und die damit verbundenen persönlichen Pflegeaktivitäten zusammen mit den den persönlichen Pflegeaktivitäten zugeordneten Informationen in der einen oder den mehreren Speichereinheiten gespeichert werden und die der bestimmten persönlichen Pflegeaktivität zugeordneten Informationen aus der einen oder den mehreren Speichereinheiten erfasst werden.

10. Verfahren wie beansprucht in einem der Ansprüche 6 bis 9, wobei das Bestimmen einer persönlichen Pflegeaktivität, die von dem mindestens einen Benutzer durchgeführt wird, umfasst oder weiter umfasst:
Erfassen eines Signals, das mit mindestens einer bei der Körperpflegeaktivität verwendeten Körperpflegegerät verbunden ist, wobei das Signal anzeigt, dass die Körperpflegeaktivität durchgeführt wird.

11. Verfahren wie beansprucht in einem der Ansprüche 6 bis 10, wobei das Verfahren ferner umfasst:
Erkennen (308) mindestens eines persönlichen Pflegegeräts in dem Bild des mindestens einen Benutzers.

12. Verfahren wie beansprucht in Anspruch 11, wobei das Erkennen mindestens eines persönlichen Pflegegeräts in dem Bild des mindestens einen Benutzers umfasst:
Erkennen mindestens eines Objekts im Bild des mindestens einen Benutzers;
Vergleichen des erfassten mindestens einen Objekts mit einer Vielzahl von vordefinierten Objektsignaturen, die mit zugehörigen Körperpflegegeräten in einer oder mehreren Speichereinheiten gespeichert sind; und Bestimmen des mindestens einen erfassten Objekts als mindestens ein Körperpflegegerät, das mit einer der Vielzahl von vordefinierten Objektsignaturen in Zusammenhang steht, wobei das erfasste mindestens eine Objekt mit der vordefinierten Objektsignatur übereinstimmt oder im Wesentlichen übereinstimmt.

13. Verfahren wie beansprucht in einem der Ansprüche 11 oder 12, wobei die identifizierten Regionen von Interesse in dem Bild durch eine Stelle definiert sind, an der das mindestens eine persönliche Pflegegerät in dem Bild des mindestens einen Benutzers erkannt wird.

14. Computerprogrammprodukt, das ein computerlesbares Medium umfasst, wobei das computerlesbare Medium einen darin verkörperten computerlesbaren Code aufweist, wobei der computerlesbare Code so konfiguriert ist, dass bei Ausführung durch einen geeigneten Computer oder Prozessor der Computer oder Prozessor veranlasst wird, das Verfahren wie beansprucht in einem der Ansprüche 6 bis 13 durchzuführen.

## Revendications

1. Appareil (100) pour supporter au moins un utilisateur dans l'exécution d'une activité de soins personnels, l'appareil (100) comprenant:
un miroir intelligent comprenant un capteur visuel (104) configuré pour obtenir une image de l'au moins un utilisateur pendant que l'au moins un utilisateur effectue l'activité de soins personnels;
une unité de commande (102) configurée pour:
acquérir, à partir d'au moins un capteur visuel (104), une image de l'au moins un utilisateur utilisant le dispositif de soins personnels sur la partie du corps de l'au moins un utilisateur;
**caractérisé en ce que** l'unité de commande (102) est en outre configurée pour:
déterminer une activité de soins personnels effectuée par l'au moins un utilisateur à l'aide du dispositif de soins personnels sur une partie du corps de l'au moins un utilisateur;
identifier, sur la base de l'activité de soins personnels déterminée, une ou plusieurs
régions d'intérêt dans l'image acquise du au moins un utilisateur, dans lequel la ou les régions d'intérêt dans l'image comprennent la partie du corps de l'au moins un utilisateur sur laquelle l'activité de soins personnels est effectuée;
acquérir des informations associées à l'activité de soins personnels déterminé, et
modifier l'image acquise de l'au moins un utilisateur au niveau de la ou des régions d'intérêt identifiées sur la base des informations acquises pour supporter l'au moins un utilisateur dans l'exécution de l'activité de soins personnels en utilisant le dispositif de soins personnels sur la partie du corps de l'au moins un utilisateur; et
afficher, en superposant sur la ou les régions d'intérêt identifiées de la réflexion de l'au moins un utilisateur dans le miroir intelligent, une partie ou la totalité de l'image modifiée.

2. Appareil selon la revendication 1, dans lequel l'unité de commande (102) est
configurée pour commander un ou plusieurs capteurs (104) pour acquérir des données sur l'au moins un utilisateur indiquant l'activité de soins personnels effectuée par l'au moins un utilisateur et pour traiter le données acquises afin de déterminer l'activité de soins personnels effectuée par l'au moins un utilisateur.

3. Appareil tel que revendiqué dans l'une quelconque des revendications précédentes, dans lequel le l'unité de commande (102) est configurée pour acquérir les informations associées à l'activité de soins personnels déterminée à partir d'une ou plusieurs unités de mémoire (106) et d'un ou plusieurs capteurs visuels (104) .

4. Appareil selon l'une quelconque des revendications précédentes, dans lequel l'unité de commande est configurée pour commander une ou plusieurs interfaces utilisateur (108) pour afficher l'image modifiée de l'au moins un utilisateur.

5. Appareil selon l'une quelconque des revendications précédentes, dans lequel les informations acquises comprennent un enrichissement spectral associé à l'activité de soins personnels déterminée.

6. Procédé (200, 300) de mise en œuvre d'un appareil (100) comprenant un miroir intelligent incluant un capteur visuel (104) configuré pour obtenir une image de l'au moins un utilisateur et une unité de commande (102) configurée pour recevoir à partir de l'au moins un capteur visuel (104) l'image obtenue de l'au moins un utilisateur afin de supporter l'au moins un utilisateur dans l'exécution d'une activité de soins personnels, le procédé (200, 300) comprenant:
l'acquisition, à partir de l'au moins un capteur visuel (104), de l'image obtenue de l'au moins un utilisateur utilisant le dispositif de soins personnels sur la partie du corps de l'au moins un utilisateur, **caractérisé en ce que** le procédé comprend en outre les étapes consistant à:
déterminer (202, 302) une activité de soins personnels effectuée par l'au moins un utilisateur en utilisant un dispositif de soins personnels sur une partie du corps de l'au moins un utilisateur;
identifier (204, 304), sur la base de l'activité de soins personnels déterminée, une ou plusieurs régions d'intérêt dans l'image acquise de l'au moins un utilisateur, dans lequel l'une ou plusieurs régions d'intérêt dans l'image comprennent la partie du corps de l'au moins un utilisateur sur laquelle l'activité de soins personnels est effectuée;
l'acquisition (206, 306) d'informations associées à l'activité de soins personnels déterminée; et
modifier (208,310) l'image acquise de l'au moins un utilisateur au niveau de la ou des régions d'intérêt identifiées sur la base des informations acquises pour aider l'au moins un utilisateur à réaliser l'activité de soins personnels en utilisant le dispositif de soins personnels sur la partie du corps de l'au moins un utilisateur;
afficher, en superposant sur la ou les régions d'intérêt identifiées de la réflexion de l'au moins un utilisateur dans le miroir intelligent, une partie ou la totalité de l'image modifiée.

7. Procédé selon la revendication 6, dans lequel la détermination d'une activité de soins personnels effectuée par l'au moins un utilisateur comprend:
la comparaison de données sur l'au moins un utilisateur acquises à partir d'un ou plusieurs capteurs, les données indiquant l'activité de soins personnels effectuée par l'au moins un utilisateur, à une pluralité de signatures d'activité prédéfinies stockées avec des activités de soins personnels associées dans une ou plusieurs unités de mémoire pour déterminer l'activité de soins personnels effectuée par l'au moins un utilisateur.

8. Procédé selon la revendication 7, dans lequel l'activité de soins personnels effectuée par l'au moins un utilisateur est déterminée comme étant une activité de soins personnels associée à l'une des pluralités de signatures d'activité prédéfinies où les données acquises sur l'au moins un utilisateur correspondent ou correspondent sensiblement à la signature d'activité prédéfinie.

9. Procédé selon l'une quelconque des revendications 7 ou 8, dans lequel la pluralité de signatures d'activités prédéfinies et d'activités de soins personnels associées sont stockées avec des informations associées aux activités de soins personnels dans la ou les plusieurs unités de mémoire et les informations associées à l'activité de soins personnels déterminée sont acquises à partir de la ou des plusieurs unités de mémoire.

10. Procédé selon l'une quelconque des revendications 6 à 9, dans lequel la détermination d'une activité de soins personnels effectuée par l'au moins un utilisateur comprend ou comprend en outre:
la détection d'un signal associé à au moins un dispositif de soins personnels utilisé dans l'activité de soins personnels, dans lequel le signal est indicatif de l'activité de soins personnels en cours d'exécution.

11. Procédé selon l'une quelconque des revendications 6 à 10, le procédé comprenant en outre:
détecter (308) au moins un dispositif de soins personnels dans l'image de l'au moins un utilisateur.

12. Procédé selon la revendication 11, dans lequel la détection d'au moins un dispositif de soins personnels dans l'image de l'au moins un utilisateur comprend:
détecter au moins un objet dans l'image de l'au moins un utilisateur;
comparer le au moins un objet détecté à une pluralité de signatures d'objet prédéfinies stockées avec des dispositifs de soins personnels associés dans une ou plusieurs unités de mémoire; et déterminer l'au moins un objet détecté comme étant au moins un dispositif de soins personnels associé à une de la pluralité de signatures d'objet prédéfinies où l'au moins un objet détecté correspond ou correspond sensiblement à la signature d'objet prédéfinie.

13. Procédé selon l'une quelconque des revendications 11 ou 12, dans lequel la ou les régions d'intérêt identifiées dans l'image sont définies par un emplacement auquel l'au moins un dispositif de soins personnels est détecté dans l'image du au moins un utilisateur.

14. Produit de programme informatique comprenant un support lisible par ordinateur, le support lisible par ordinateur ayant un code lisible par ordinateur incorporé dans celui-ci, le code lisible par ordinateur étant configuré de telle sorte que, lors de l'exécution par un ordinateur ou un processeur approprié, l'ordinateur ou le processeur est amené à exécuter le procédé de l'une quelconque des revendications 6 à 13.
